# EUROPEAN PATENT APPLICATION

(11) **EP 4 746 050 A1**
(43) Date of publication of application: **20.05.2026**
(21) Application number: 25202336.1
(22) Date of filing: 16.09.2025
(51) Int. Cl.: H01M 4/04, B30B 3/04

(54) **ROLL PRESS APPARATUS FOR MANUFACTURING ELECTRODE PLATE**

(30) Priority: 13.11.2024 KR 20240161406
(71) Applicant: SAMSUNG SDI CO., LTD., Yongin-si, Gyeonggi-do 17084 (KR)
(72) Inventor: MIN, Jungki, 17084 Yongin-si, Gyeonggi-do (KR)
(74) Representative: Gulde & Partner

(57) **Abstract**

A roll press apparatus for manufacturing the electrode plate includes a frame portion, a base roller rotatably installed on the frame portion and configured to press a first surface of an electrode plate; a plurality of pressing rollers slidably arranged on the frame portion in a direction of the base roller; a first driver configured to provide a rotational driving force to the base roller; a second driver arranged on the frame portion and configured to provide a sliding driving force to each of the plurality of pressing rollers; a plurality of pressure sensors arranged on the second driver to sense a pressing force applied by respective pressing rollers of the plurality of pressing rollers; and a controller configured to control the second driver to increase the sliding driving force applied to any one of the plurality of pressing rollers if a smaller pressure is sensed relative to another pressure.

## Description

### BACKGROUND

### 1. Field

The present invention relates to a roll press apparatus for manufacturing an electrode plate.

### 2. Description of the Related Art

In general, a roll press apparatus for manufacturing an electrode plate is an apparatus that processes metal materials using the plasticity of a metal, which processes the metal materials by passing the metal materials between two rotating rolls.

A conventional roll press apparatus for manufacturing an electrode plate uses a hydraulic press to apply force and uses large rolls.

However, during a process of coating and pressing the electrode plate, a slurry at an edge of the electrode plate may slide, causing a thickness imbalance between the edge and a center of the electrode plate.

As such, if an imbalance in the thickness of the electrode plate occurs, there is a problem in that precipitation may be formed in a band shape at the edge of the electrode plate.

Therefore, it is desirable to manufacture the electrode plate such that a thickness imbalance of the electrode plate is eliminated or reduced during the process of manufacturing the electrode plate using the roll press apparatus for manufacturing the electrode plate.

### SUMMARY

According to an aspect of embodiments of the present invention, a roll press apparatus for manufacturing an electrode plate is provided that is capable of manufacturing electrode plates without causing thickness imbalance in the electrode plates by applying different pressures to the electrode plates corresponding to different thicknesses of the electrode plates.

The present invention is set out in the appended set of claims, wherein the drawings and respective description relate to advantageous embodiments thereof.

According to one or more embodiments of the present invention, a roll press apparatus for manufacturing an electrode plate includes a frame portion, a base roller rotatably installed on the frame portion and configured to press a first surface of an electrode plate; a plurality of pressing rollers slidably arranged on the frame portion in a direction of the base roller and configured to press a second surface opposite to the first surface of the electrode plate; a first driver configured to provide a rotational driving force to the base roller; a second driver arranged on the frame portion and configured to provide a sliding driving force to each of the plurality of pressing rollers; a plurality of pressure sensors arranged on the second driver to sense a pressing force applied by respective pressing rollers of the plurality of pressing rollers; and a controller configured to control the second driver to increase the sliding driving force applied to any one of the plurality of pressing rollers if a smaller pressure is sensed relative to another pressure sensed, in response to receiving sensing signals from the pressure sensors.

The plurality of pressing rollers may include a first pressing roller configured to slide in the frame portion toward the base roller by the second driver to press a first part of the electrode plate, and a second pressing roller configured to slide in the frame portion toward the base roller by the second driver to press a second part of the electrode plate.

The first part may be an insulating coating part of the electrode plate, and the second part may be a composite coating part of the electrode plate.

The first pressing roller and the second pressing roller may be arranged with different lengths.

The first pressing roller and the second pressing roller may be slidably arranged by an LM guide at a lateral position of the frame portion.

The LM guide may include a first LM guide arranged in a protruding state on the frame portion to allow the first pressing roller to be slidably arranged, and a second LM guide arranged in a protruding state on the frame portion to allow the second pressing roller to be slidably arranged.

The roll press apparatus for manufacturing the electrode plate may further include a first bracket arranged in a protruding state on the first LM guide such that the first pressing roller is rotatably arranged, and a second bracket arranged in a protruding state on the second LM guide such that the second pressing roller is rotatably arranged.

The first bracket may include a first support arranged in a protruding state on the first LM guide, and a first supporting bracket arranged on the first support and supporting a rotational axis of the first pressing roller.

The second bracket may include a second support arranged in a protruding state on the second LM guide, and a second supporting bracket arranged on the second support and supporting a rotational axis of the second pressing roller.

The second driver may include a cylinder member arranged on the frame portion and configured to provide the sliding driving force to the pressing rollers.

The cylinder member may include a first cylinder member arranged on the frame portion and configured to provide a first sliding driving force to the first pressing roller, and a second cylinder member arranged on the frame portion and configured to provide a second sliding driving force to the second pressing roller.

The first cylinder member may include a first cylinder body including a side arranged on the frame portion, and a first rod member arranged on the first cylinder body and including an end connected to the first bracket.

The first cylinder member may include a second cylinder body including a side installed on the frame portion, and a second rod member arranged on the second cylinder body and including an end connected to the second bracket.

The controller may be configured to control the first cylinder member to press the first part of the electrode plate with a first pressure by the first pressing roller in response to receiving a sensing signal from the pressure sensor, and to control the second cylinder member to press the second part of the electrode plate with a second pressure greater than the first pressure by the second pressing roller in response to receiving the sensing signal from the pressure sensor.

The first driver may include a driving motor configured to provide a rotational driving force, and a belt member connected to a rotational axis of the driving motor and a rotational axis of the base roller to transmit the rotational driving force.

According to an aspect of one or more embodiments of the present invention, by using a plurality of pressing rollers to press portions of the electrode plate having different thicknesses with different pressures, the electrode plate may be manufactured without causing the thickness imbalance, thereby improving the quality of the electrode plate manufacturing.

### BRIEF DESCRIPTION OF THE DRAWINGS

FIG. 1 is a perspective view schematically illustrating a roll press apparatus for manufacturing an electrode plate according to an embodiment of the present invention.
FIG. 2 is a top plan view schematically illustrating the roll press apparatus for manufacturing an electrode plate of FIG. 1.
FIG. 3 is a side view schematically illustrating a portion of the roll press apparatus for manufacturing an electrode plate of FIG. 1 in which a first pressing roller is installed.
FIG. 4 is a side view schematically illustrating a portion of the roll press apparatus for manufacturing an electrode plate of FIG. 1 in which a second pressing roller is installed.

### DETAILED DESCRIPTION

The present invention will be described more fully herein with reference to the accompanying drawings, in which some embodiments of the invention are shown. The drawings and description are to be regarded as illustrative in nature and not restrictive, and like reference numerals designate like elements throughout the specification.

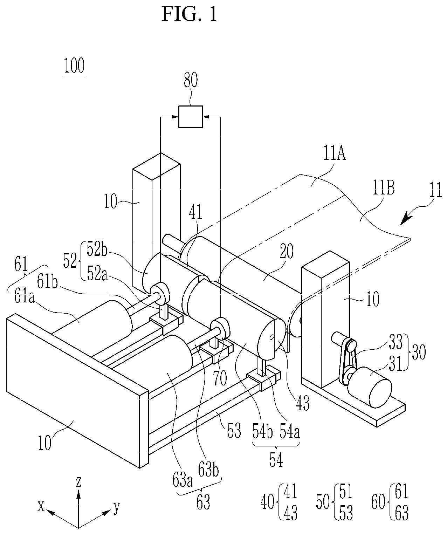

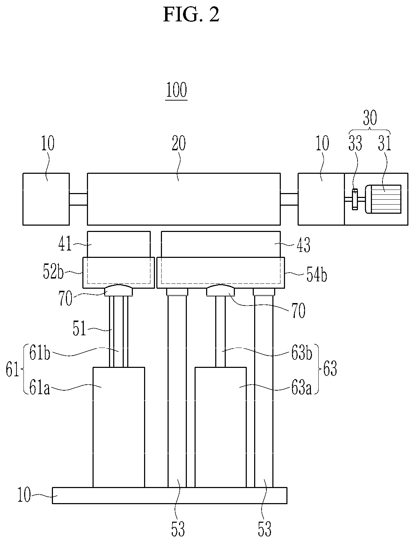

FIG. 1 is a perspective view schematically illustrating a roll press apparatus for manufacturing an electrode plate according to an embodiment of the present invention; and FIG. 2 is a top plan view schematically illustrating the roll press apparatus for manufacturing an electrode plate of FIG. 1.

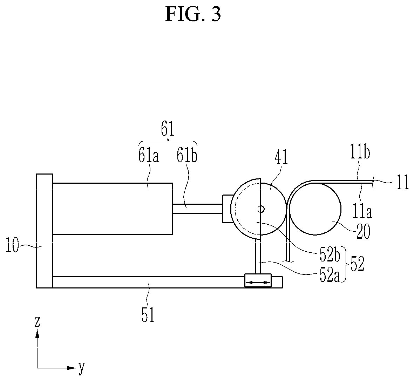

As shown in FIGS. 1 and 2, a roll press apparatus for manufacturing an electrode plate 11 according to an embodiment of the present invention includes a frame portion 10, a base roller 20 rotatably installed, or arranged, on the frame portion 10 and configured to press a first surface 11a (see FIG. 3) of an electrode plate 11. The roll press apparatus according to the invention further includes a plurality of pressing rollers 40 slidably installed, or arranged, on the frame portion 10 in a direction of the base roller 20 and configured to press a second surface 11b (see FIG. 3) opposite to the first surface 11a of the electrode plate 11. The roll press apparatus according to the invention further includes a first driver 30 configured to provide a rotational driving force to the base roller 20, a second driver 60 installed, or arranged, on the frame portion 10 and configured to provide a sliding driving force to each of the plurality of pressing rollers 40, a plurality of pressure sensors 70 installed, or arranged, in the second driver 30 to sense a pressing force applied by each sliding of the plurality of pressing rollers 40, and a controller 80 that receives a sensing signal from a pressure sensor 70 and controls the second driver 60 to apply a large or relatively large driving force in a direction of the pressing roller 40 where a relatively small pressure is sensed.

In an embodiment, the frame portion 10 is installed, or arranged, on a floor surface of a work space, and the base roller 20 may be installed, or arranged, rotatably thereon.

The frame portion 10 may be installed on the floor surface of the work space with an installation space formed in which the base roller 20 is rotatably installed.

In the frame portion 10, both, or opposite, ends of the base roller 20 may be rotatably installed.

The base roller 20 is rotatably installed by the driving force of the first driver 30 while installed in the frame portion 10, and may be rotatably installed by the driving force of the first driver 30 while supporting the first surface 11a of the electrode plate 11.

The base roller 20 is installed with a long length in a width direction of the electrode plate 11, and may be installed to press the first surface 11a of the electrode plate 11 while maintaining a distance (e.g., a predetermined distance) from a pressing roller 40.

The first driver 30 may be installed to provide the rotational driving force to the base roller 20.

In an embodiment, the first driver 30 may include a driving motor 31 that provides the rotational driving force. The first driver 30 may further include a belt member 33 that is connected to the rotational axis of the driving motor 31 and to a rotational axis of the base roller 20 to transmit the rotational driving force.

The driving motor 31 may be installed inside the frame portion 10 or outside the frame portion 10 and may be installed to be driven manually or remotely under an operator's operational control.

The rotational driving force of the driving motor 31 is transmitted to the base roller 20 by the belt member 33 such that the base roller 20 may be properly rotated, thereby enabling the electrode plate to be smoothly manufactured to a certain thickness (e.g., a predetermined thickness).

The belt member 33 is connected between the rotational axis of the driving motor 31 and the base roller 20, and may be connected such that the rotational driving force of the driving motor 31 is stably transmitted to the base roller 20.

The pressing roller 40 may be slidably installed in the direction of the base roller 20 from the frame portion 10. The pressing rollers 40 may be slidable by the driving force of the second driver 60 while installed in the frame portion 10.

A plurality of pressing rollers 40 are installed in the frame portion 10, and each of the plurality may be individually slid by the driving force of the second driver 60.

In an embodiment, the pressing roller 40 may include a first pressing roller 41 that presses a first part of the electrode plate 11 and a second pressing roller 43 that presses a second part of the electrode plate 11. In an embodiment, the first pressing roller 41 and the second pressing roller 43 may be installed with different lengths.

FIG. 3 is a side view schematically illustrating a portion of the roll press apparatus for manufacturing an electrode plate of FIG. 1 in which a first pressing roller is installed.

As shown in FIGS. 2 and 3, the first pressing roller 41 may be installed to press a first part 11A of the electrode plate 11 by sliding from the frame portion 10 toward the base roller 20 by the second driver 60. In an embodiment, the first pressing roller 41 may be configured to slide in the frame portion 10 toward the base roller 20 by the second driver 60 to press a first part 11A of the electrode plate 11.

The first part 11A is an edge part of the electrode plate 11 and refers to a relatively thin part of the electrode plate 11. That is, the first part 11A may be a relatively thin insulating coating part among a composite coating and insulating coating of the electrode plate. Thus, the first part 11A may be an insulating coating part of the electrode plate 11.

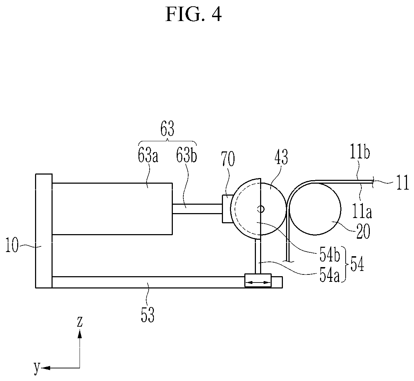

FIG. 4 is a side view schematically illustrating a portion of the roll press apparatus for manufacturing an electrode plate of FIG. 1 in which a second pressing roller is installed.

As shown in FIGS. 2 and 4, the second pressing roller 43 may be installed to press a second part 11B of the electrode plate 11 by sliding from the frame portion 10 toward the base roller 20 by the second driver 60.

The second part 11B refers to a part of the electrode plate 11 excluding the first part described above, and is a part that is relatively thicker than the first part 11A. In an embodiment, the second part 11B may be a composite coating part of the electrode plate 11.

In an embodiment, an LM guide 50 is installed in the frame portion 10 such that the first pressing roller 41 and the second pressing roller 43 may be slidably operated by the second driver 60. In an embodiment, the second pressing roller 43 may be configured to slide in the frame portion 10 toward the base roller 20 by the second driver 60 to press a second part 11B of the electrode plate 11.

The LM guide 50 may include a first LM guide 51 that is installed in a protruding state on the frame portion 10 and allows the first pressing roller 41 to be slidably installed. The LM guide 50 may further include a second LM guide 53 that is installed in a protruding state on the frame portion 10 and allows the second pressing roller 43 to be slidably installed. Thus, the first pressing roller 41 and the second pressing roller 43 may be slidably arranged by an LM guide 50 at a lateral position of the frame portion 10.

The first LM guide 51 may be installed such that a first side is installed on the frame portion 10 and a second side protrudes in a direction of the first pressing roller 41 such that the first pressing roller 41 may move in the longitudinal direction of the first LM guide 51.

A first bracket 52 for rotatable installation of the first pressing roller 41 may be installed on the first LM guide 51.

The first bracket 52 may include a first support 52a that is installed in a protruding state on the first LM guide 51. The first bracket 52 may further include a first supporting bracket 52b that is installed on the first support 52a and supports a rotational axis of the first pressing roller 41.

The first support 52a may have a first end connected to the first LM guide 51 and a second end protruding upward and connected to the first supporting bracket 52b.

The first supporting bracket 52b is connected to the first support 52a and installed in a protruding state on the upper portion of the first LM guide 51 such that the first pressing roller 41 may be installed in a rotatable state.

The second LM guide 53 may be installed such that a first side is installed on the frame portion 10 and a second side protrudes in a direction of the second pressing roller 43 such that the second pressing roller 43 may move in the longitudinal direction of the second LM guide 53.

A second bracket 54 for rotatable installation of the second pressing roller 43 may be installed on the second LM guide 53.

The second bracket 54 may include a second support 54a that is installed in a protruding state on the first LM guide 51. The second bracket 54 may further include a second supporting bracket 54b that is installed on the second support 54a and supports a rotational axis of the second pressing roller 43.

The second support 54a may have a first end connected to the second LM guide 53 and a second end protruding upward and connected to the second supporting bracket 54b.

The second supporting bracket 54b is connected to the second support 52a and installed in a protruding state on the upper portion of the second LM guide 53 such that the second pressing roller 43 may be installed in a rotatable state.

As described above, the first and second pressing rollers 41 and 43 may be slidably installed on the frame portion 10 by the LM guide 50 and may be slid toward the base roller 20 by the driving force of the second driver 60.

The second driver 60 may include first and second cylinder members 61 and 63 installed on the frame portion 10 and providing sliding driving force to the first and second pressing rollers 41 and 43.

The first cylinder member 61 may include a first cylinder body 61a having a side installed, or arranged, on the frame portion 10. The first cylinder member 61 may further include a first rod member 61b installed, or arranged, on the first cylinder body 61a and having an end connected to the first bracket 52.

The first cylinder body 61a may be installed on the frame portion 10 such that the first rod member 61b faces the first bracket 52.

The first rod member 61b may have an end connected to the first bracket 52.

Accordingly, the first bracket 52 may move along the first LM guide 51 by forward and backward operation of the first rod member 61b.

In an embodiment, a pressure sensor 70 may be installed between the first rod member 61b and the first bracket 52.

The pressure sensor 70 may sense a pressure applied to a surface of the electrode plate 11 by the first pressing roller 41 by the operation of the first rod member 61b and transmit information of the pressure to the controller 80.

The second cylinder member 63 may include a second cylinder body 63a having a side installed, or arranged, on the frame portion 10. The second cylinder member 63 may further include a second rod member 63b installed, or arranged, on the second cylinder body 63a and having an end connected to the second bracket 54.

The second cylinder body 63a may be installed on the frame portion 10 such that the second rod member 63b faces the second bracket 54.

The second rod member 63b may have an end connected to the second bracket 54.

Accordingly, the second bracket 54 may move along the second LM guide 53 by forward and backward operation of the second rod member 63b.

In an embodiment, a pressure sensor 70 may be installed between the second rod member 63b and the second bracket 54.

The pressure sensor 70 may sense a pressure applied to the surface of the electrode plate 11 by the second pressing roller 43 by the operation of the second rod member 63b and transmit information of the pressure to the controller 80.

The controller 80 may receive the sensing signal of the pressure sensor 70 described above and check the pressure applied by the first pressing roller 41 to the electrode plate 11 and the pressure applied by the second pressing roller 43 to the electrode plate 11, respectively.

The controller 80 determines that, if the pressure applied by the first pressing roller 41 to the electrode plate 11 and the pressure applied by the second pressing roller 43 to the electrode plate 11 are different from each other, the thickness of the electrode plate 11 is different between the first part 11A of the electrode plate 11 and the second part 11B.

Then, the controller 80 may control the operation of the second driver 60 such that the pressure applied by the first and second pressing rollers 41 and 43 to the electrode plate 11 is different from each other.

That is, the controller 80 may control the pressure of the second pressing roller 43 pressing the relatively thick second part 11B of the electrode plate 11 to press at a pressure greater than the pressure of the first pressing roller 41 pressing the first part 11A.

Accordingly, the electrode plate 11 may be manufactured by pressing the first and second parts with different thicknesses by different pressing forces of the first and second pressing rollers 41 and 43 such that it is possible to manufacture the electrode plate 11 with a uniform or substantially uniform thickness.

### DESCRIPTION OF SYMBOLS

| | | | |
|---|---|---|---|
| 10: | Frame portion | 11: | Electrode plate |
| 11a: | First surface | 11b: | Second surface |
| 11A: | First part | 11B: | Second part |
| 20: | Base roller | 30: | First driver |
| 31: | Driving motor | 33: | Belt member |
| 40: | Pressing roller | 41: | First pressing roller |
| 43: | Second pressing roller | 50: | LM guide |
| 51: | First LM guide | 52: | First bracket |
| 52a: | First support | 52b: | First supporting bracket |
| 53: | Second LM guide | 54: | Second bracket |
| 54a: | Second support | 54b: | Second supporting bracket |
| 60: | Second driver | 61: | First cylinder member |
| 61a: | First cylinder body | 61b: | First rod member |
| 63: | Second cylinder member | 63a: | Second cylinder body |
| 63b: | Second rod member | 70: | Pressure sensor |
| 80: | Controller | | |

## Claims

1. A roll press apparatus for manufacturing an electrode plate (11), the roll press apparatus comprising:
a frame portion (10);
a base roller (20) rotatably installed on the frame portion (10) and configured to press a first surface (11a) of an electrode plate (11);
a plurality of pressing rollers (40) slidably arranged on the frame portion (10) in a direction of the base roller (20) and configured to press a second surface (11b) opposite to the first surface (11a) of the electrode plate (11);
a first driver (30) configured to provide a rotational driving force to the base roller (20);
a second driver (60) arranged on the frame portion (10) and configured to provide a sliding driving force to each of the plurality of pressing rollers (40);
a plurality of pressure sensors (70) arranged on the second driver (60) to sense a pressing force applied by respective pressing rollers (40) of the plurality of pressing rollers (40); and
a controller (80) configured to control the second driver (60) to increase the sliding driving force applied to any one of the plurality of pressing rollers (40) if a smaller pressure is sensed relative to another pressure sensed, in response to receiving sensing signals from the pressure sensors (70).

2. The roll press apparatus for manufacturing an electrode plate (11) as claimed in claim 1, wherein
the plurality of pressing rollers (40) comprises:
a first pressing roller (41) configured to slide in the frame portion (10) toward the base roller (20) by the second driver (60) to press a first part (11A) of the electrode plate (11); and
a second pressing roller (43) configured to slide in the frame portion (10) toward the base roller (20) by the second driver (60) to press a second part (11B) of the electrode plate (11).

3. The roll press apparatus for manufacturing an electrode plate (11) as claimed in claim 2, wherein the first part (11A) is an insulating coating part of the electrode plate (11), and the second part (11B) is a composite coating part of the electrode plate (11).

4. The roll press apparatus for manufacturing an electrode plate (11) as claimed in claims 2 or 3, wherein the first pressing roller (41) and the second pressing roller (43) are arranged with different lengths.

5. The roll press apparatus for manufacturing an electrode plate (11) as claimed in any of claims 2 to 4, wherein the first pressing roller (41) and the second pressing roller (43) are slidably arranged by an LM guide (50) at a lateral position of the frame portion (10).

6. The roll press apparatus for manufacturing an electrode plate (11) as claimed in claim 5, wherein the LM guide (50) comprises:
a first LM guide (51) arranged in a protruding state on the frame portion (10) to allow the first pressing roller (41) to be slidably arranged; and
a second LM guide (53) arranged in a protruding state on the frame portion (10) to allow the second pressing roller (43) to be slidably arranged.

7. The roll press apparatus for manufacturing an electrode plate (11) as claimed in claim 6, further comprising:
a first bracket (52) arranged in a protruding state on the first LM guide (51) such that the first pressing roller (41) is rotatably arranged; and
a second bracket (54) arranged in a protruding state on the second LM guide (53) such that the second pressing roller (43) is rotatably arranged.

8. The roll press apparatus for manufacturing an electrode plate (11) as claimed in claim 7, wherein the first bracket (52) comprises:
a first support (52a) arranged in a protruding state on the first LM guide (51); and
a first supporting bracket (52b) arranged on the first support (52a) and supporting a rotational axis of the first pressing roller (41).

9. The roll press apparatus for manufacturing an electrode plate (11) as claimed in claim 8, wherein the second bracket (54) comprises:
a second support (54a) arranged in a protruding state on the second LM guide (53); and
a second supporting bracket (54b) arranged on the second support (54a) and supporting a rotational axis of the second pressing roller (43).

10. The roll press apparatus for manufacturing an electrode plate (11) as claimed in any of claims 2 to 9, wherein the second driver (60) comprises a cylinder member (61, 63) installed on the frame portion (10) and configured to provide the sliding driving force to the first and second pressing rollers (41, 43).

11. The roll press apparatus for manufacturing an electrode plate (11) as claimed in claim 10, wherein the cylinder member (61, 63) comprises:
a first cylinder member (61) arranged on the frame portion (10) and configured to provide a first sliding driving force to the first pressing roller (41); and
a second cylinder member (63) arranged on the frame portion (10) and configured to provide a second sliding driving force to the second pressing roller (43).

12. The roll press apparatus for manufacturing an electrode plate (11) as claimed in claim 11, wherein the first cylinder member (61) comprises:
a first cylinder body (61a) comprising a side installed on the frame portion (10); and
a first rod member (61b) arranged on the first cylinder body (61a) and comprising an end connected to the first bracket (52).

13. The roll press apparatus for manufacturing an electrode plate (11) as claimed in claim 11, wherein the second cylinder member (63) comprises:
a second cylinder body (63a) comprising a side installed on the frame portion (10); and
a second rod member (63b) arranged on the second cylinder body (63a) and comprising an end connected to the second bracket (54).

14. The roll press apparatus for manufacturing an electrode plate (11) as claimed in any of claims 10 to 13, wherein the controller (80) is configured to control the first cylinder member (61) to press the first part (11A) of the electrode plate (11) with a first pressure by the first pressing roller (41) in response to receiving a sensing signal from the pressure sensor (70), and to control the second cylinder member (63) to press the second part (11B) of the electrode plate (11) with a second pressure greater than the first pressure by the second pressing roller (43) in response to receiving the sensing signal from the pressure sensor (70).

15. The roll press apparatus for manufacturing an electrode plate (11) as claimed in any of claims 1 to 14, wherein the first driver (30) comprises:
a driving motor (31) configured to provide the rotational driving force; and
a belt member (33) connected to a rotational axis of the driving motor (31) and a rotational axis of the base roller (20) to transmit the rotational driving force.
